## Europäisches Patentamt
## European Patent Office
## Office européen des brevets

(11) Publication number: **0 069 078**
**B1**

(12) **EUROPEAN PATENT SPECIFICATION**

(45) Date of publication of patent specification: **26.11.86**

(51) Int. Cl.⁴: **A 21 C 3/02, A 21 C 11/00**

(21) Application number: **82830140.8**

(22) Date of filing: **24.05.82**

(54) **Device to spread the dough for pizza.**

(30) Priority: **18.06.81 IT 8341081**

(43) Date of publication of application:
**05.01.83 Bulletin 83/01**

(45) Publication of the grant of the patent:
**26.11.86 Bulletin 86/48**

(84) Designated Contracting States:
**AT BE CH DE FR GB LI LU NL SE**

(56) References cited:
**CH-A- 289 367
FR-A-2 275 387
FR-A-2 354 050
IT-A-8 363 977
US-A-2 707 924
US-A-3 237 743
US-A-3 543 916
US-A-3 792 948
US-A-3 999 926**

(73) Proprietor: **ZAMUCI Srl
Via Roma, 50/4
I-33100 Udine (IT)**

(72) Inventor: **Zamparelli, Walter
Via S.Rocco, 230
I-33100 Udine (IT)**
Inventor: **Cimenti, Antonio
Via Baron, 15
I-30027 S.Dona' Di Piave (VE) (IT)**
Inventor: **Muscariello, Giuseppe
Viale Venezia, 97
I-33100 Udine (IT)**

(74) Representative: **Petraz, Gilberto Luigi
G.L.P. S.a.s. di Gilberto Petraz P.le Cavedalis 6/2
I-33100 Udine (IT)**

Courier Press, Leamington Spa, England.

## Description

This invention concerns a device to spread out the dough for pizza. To be more exact, the invention concerns a device to spread out, in thin circular rounds of a desired thickness, the lumps of dough used in the preparation of pizza.

The lumps of dough used to prepare pizza are kneaded into a shape and distribution of mass like that of a sphere or hemisphere some hours before being used so as to allow the dough to rise properly and can be rolled out either at the time when the pizza is to be prepared and cooked or beforehand.

In the daily business of a pizza parlour the work of spreading out the lumps of dough may be concentrated within the short space of time while the pizzas are being eaten.

In any event, if this work is done by hand, considerable problems are met with both as regards cost and also in finding the personnel required.

Mechanical devices have been embodied for this purpose which spread out the lumps of dough by pressing them between two disks.

Such devices bring about only a small increase in output as compared to production by hand and have the shortcoming that the thin round of dough obtained remains partially stuck to the disks owing to the force exerted in spreading and moving the dough from the middle to the periphery of the disk.

To overcome this shortcoming it has been necessary to heat the disk strongly, but this expedient not only affects the complexity and cost of construction and the convenience of using the device to an unfavourable extent but also impairs the quality of the thin round thus obtained, the quality having already been lowered by the high pressure which the dough has to undergo.

Other prior art machines for rolling dough are disclosed in US—A—3,792,948 and CH—A—289,367 mentioned in the search report made at the EPO in relation to this subject matter.

Each of these two patents teaches dough-rolling apparatus employing two pairs of rollers arranged at right angles to each other and generally in two parallel horizontal planes.

In the machine described in CH—A—289,367, the dough, after leaving the first pair of rollers, must be fed by hand to the second pair of rollers. This drastically reduces the production rate of the machine and the handling of the lump of dough may spoil the thin rounds of pizza.

To obviate this disadvantage the machine disclosed in US—A—3,792,948 employs, intermediate to the two pairs of rollers, a conveyor belt means moving parallel to the axis of the first pair of rollers and perpendicular to the axis of the second pair of rollers, there being provided an inclined chute between the first pair of rollers and the conveyor means.

US—A—3,999,926 envisages two parallel pairs of rollers with an overturning means between them, whereby this overturning means takes the spread-out thin round which has left the first pair of rollers, and turns it over by 90° into the second pair of rollers.

There are also other devices such as those of US—A—3,543,916, US—A—2,707,924, US—A—3,237,743, FR—A—2,354,050 and FR—A—2,275,387, but they are all less advanced than US—A—3,999,926.

US—A—3,999,926 is the disclosure which comes closest to the correct handling of the thin round of dough so as to obtain almost circular final rounds.

The consistency of the initial dough and its conformation cannot be uniform, and this entails a thin foil elongated in an uneven manner and therefore cooperating unevenly with the supporting overturning surface.

Moreover, the thin round leaving the first pair of rollers knocks against the lower holding edge of the overturning surface and is deformed and thus does not cooperate with the second set of rollers in an orderly manner.

Furthermore, the overturning surface should rotate by about 90° before the first thin round leaves it and falls in an orderly manner into the second pair of rollers, it would appear that this may happen since the round of dough leaves the overturning surface in a position not parallel to or not substantially parallel to the second pair of rollers.

This fact causes the round of dough to be worked in a disorderly manner, and the dough appears at the outlet of the second pair of rollers in a substantially star-shaped and not circular form.

No better is the behaviour of the machine disclosed in IT 83639 A/77, which differs from US—A—3,999,926 in having an overturning set square instead of the overturning surface.

However IT 83639 A/77 has been used as the basis for formulating the precharacterising part of Claim 1.

The present author has also found that it is necessary that the cooperation between the final stop means of the overturning surface, or lateral wing of the overturning set square, and the round of dough leaving the first pair of rollers should take place from the time when the dough is still engaged in the first pair of rollers so that the dough never lacks at least one anchorage point.

Furthermore, the author has found that the withholding element, whether it be the final stop means of the overturning surface or the lateral wing of the overturning set square, must cooperate with the round of dough leaving the first pair of rollers so that:

— when the dough begins cooperating with that overturning element, the latter has a holding means to prevent the part of the dough already outside the rollers from slipping sideways, and so that

— when the dough has come into contact with that overturning element, the latter has to accompany the dough and only let it free to slip sideways after the dough has wholly left the first pair of rollers.

Our invention has the pre-set aims of embodying a simple small machine to spread the lumps of dough for pizza into thin circular rounds which is able to be readily and economically made, has a high output, is practical to use and does not impair in any way the quality of the thin rounds obtained and which can be easily installed and operated in a pizza parlour.

This invention is embodied in a device to spread the dough for pizza in two mutually perpendicular directions which has:
— a carrying structure having a sloping working surface,
— a first pair of spreading rollers to roll the dough, the rollers being mounted at the upper end of supports secured to the sloping working surface of the carrying structure,
— a second pair of spreading rollers to roll the dough, such rollers being disposed below the first pair of rollers and being secured to the sloping working surface of the carrying structure by supports, the feeding path of the second pair of rollers being in the same plane as the feeding path of the first pair of rollers,
— a metal sheet which acts as a sliding surface for the dough and is installed on the sloping working surface in such a way that the lower rollers of the pairs of rollers project partially above the metal sheet, whereby the projection of the lower rollers can be regulated with suitable spacer means that anchor the metal sheet,
— an oscillating supporting and guiding means which is fitted to the metal sheet in the zone between the two pairs of rollers and has an arm which is its rest position is substantially at a right angle to the axis of departure of the dough, such arm having a rounded portion positioned downstream of the axis of departure of the dough, the guiding means being able temporarily to support and movably to guide the dough sliding on the metal sheet,
characterized in that the second pair of spreading rollers is disposed at an angle relatively to the first pair of spreading rollers, and in that the first pair of spreading rollers has a tilted lengthwise axis that diverges from the horizontal, and the oscillating supporting and guiding means has an arm with a rounded end portion extending towards the first pair of rollers, such rounded end portion being adapted to support movably and guide the leading end of the dough when the dough is still engaged by the first pair of rollers.

According to a preferential embodiment of the invention the pairs of spreading rollers are positioned at right angles to each other and at an angle to the lower side of the tilted working surface of the carrying structure. Furthermore, according to a preferential embodiment the oscillating supporting and guiding means consists of a counter-balanced lever pivoting on the sliding surface and having a curved first arm that retains sideways, sustains and guides the dough during its exit from the first pair of rollers, and a second arm that is equipped with a counter-weight and regulates the supporting and guiding action exerted by the curved first arm, which allows the dough to slide towards the second pair of rollers when the dough is disengaged from the first pair of rollers.

In its position of rest the curved arm comprises an element stretching substantially at right angles to the axis of departure of the dough from the first pair of rollers and also comprises a curved end element which is connected to the first element, extends approximately parallel to that axis of departure and is positioned downstream from that axis.

The curved arm is pivoted at a position upstream from the axis of departure of the dough from the first pair of rollers and in the neighbourhood of the continuation of the element stretching substantially at right angles to the axis of departure of the dough from the first pair of rollers.

Furthermore, according to the invention there is provided on the sliding surface at the exit of the first pair of rollers and opposite to the oscillating supporting and guiding means a rotating path-corrector means which is kinematically connected to at least one of the two pairs of rollers and acts on the inner side of the dough coming out of the first pair of rollers. The path-corrector means tends to prevent the rotation of the dough around an axis perpendicular to the sliding surface and ensures that the rolled dough slides towards the second pair of rollers with its major axis parallel to the axis of the second pair of rollers.

Hereinafter we shall set forth a preferential embodiment of the invention as a non-restrictive example and shall make references to the attached figures, wherein:—

Fig. 1 gives a front view of the device of the invention and shows the shape of the dough before and after it has been rolled for the first and second times;

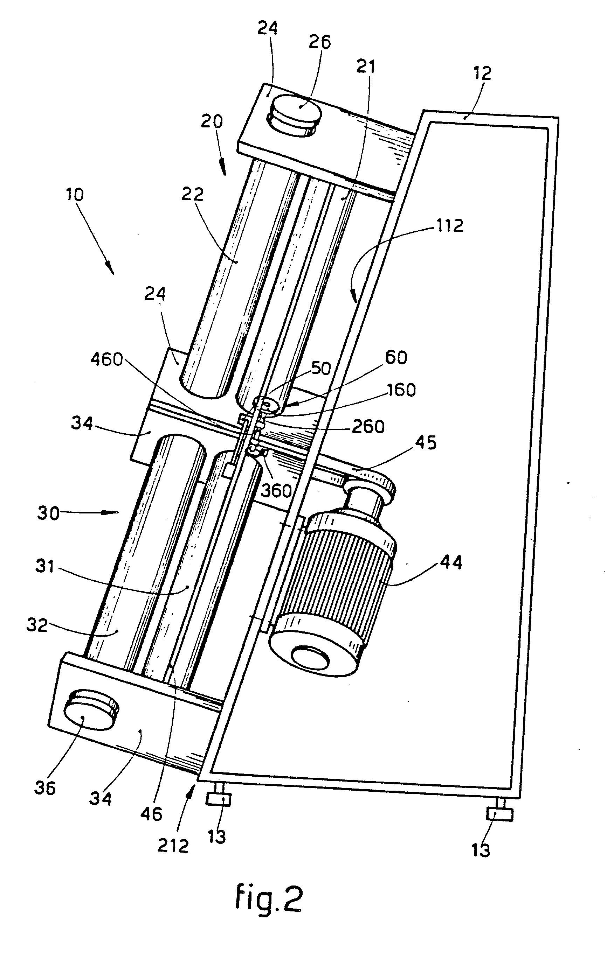

Fig. 2 gives a side view of the device of the invention.

In the figures, 10 is the device of the invention, while 12 is a carrying structure of the device and is equipped with adjustable feet 13; 20 is a first pair of rollers and consists of a lower roller 21 and upper roller 22, which are upheld by supports 24 and equipped with eccentric means 26 that regulate the gap between the rollers.

On the roller 21, at one end 27 outside the support 24, a bevel gear 28 is installed, which is part of a bevel gear pair 40 that transmits motion to the first pair of rollers 20; 30 is a second pair of rollers and consists of a lower roller 31 and upper roller 32, which are upheld by supports 34 and equipped with eccentric means 36 that regulate the gap between the rollers.

This second gap is the same as the desired thickness of the thin rounds and is about half of the gap between the rollers 21—22 of the first pair 20.

On the roller 31, at one end 37 outside the support 34, a bevel gear 38 is installed and is part of a bevel gear pair 40.

40 is the bevel gear pair that transmits the motion received by the end 37 of the roller 31 to the first pair of rollers 20; on the end 37 is keyed a pulley 42 that is operated through suitable transmission means 45 by a motor 44, which in this instance consists of an electric motor fitted inside the carrying structure 12.

46 is a metal sheet that acts as the sliding surface for the dough and is fitted substantially, but not necessarily, parallel to a sloping surface 112 of the carrying structure 12 at a level which coincides with the upper half of the lower rollers 21—31 and which can be adjusted with anchoring spacer means.

50 is an oscillating supporting means and in this instance consists of a counter-balanced lever pivoted at 51 on the sheet 46, being able to keep the dough in the direction of the first rolling thereof by means of its curved arm 52 until the dough has wholly left the first pair of rollers 20, and being coordinated in this by the action of its arm 54 carrying a counter-weight 55.

The action of the counter-weight arm 54 can also be carried out effectively by suitably positioned spring means instead of the counter-weight arm 54; 11, 111 and 211 are the dough and are respectively the dough 11 at the intake of the device, 111 after the first rolling and 211 at the outlet of the device after the second rolling.

The lever arm 52 has an end portion 152 which is curved towards the second pair of rollers in such a way that when the arm 52 is in its lower position, that is, when the upper end of the dough leaves the first pair of rollers 20, the curved portion 152 points in a direction perpendicular to the second pair of rollers.

This allows the dough to slide freely under its own weight towards the second pair of rollers 30 with its major axis parallel thereto after leaving the first pair of rollers 20.

To eliminate any tendency of the dough leaving the first pair of rollers 20 to rotate and slide towards the second pair of rollers 30 before becoming completely disengaged from the first pair of rollers 20, a path-corrector means 60 may be provided in the corner formed between the two pairs of rollers 20 and 30 and inwardly in relation to the oscillating supporting and guiding means 50. The path-corrector means 60 consists of a rotating disk 160 of which the periphery engages the dough on the internal side of its major axis so as to rotate the dough towards the oscillating supporting and guiding means 50.

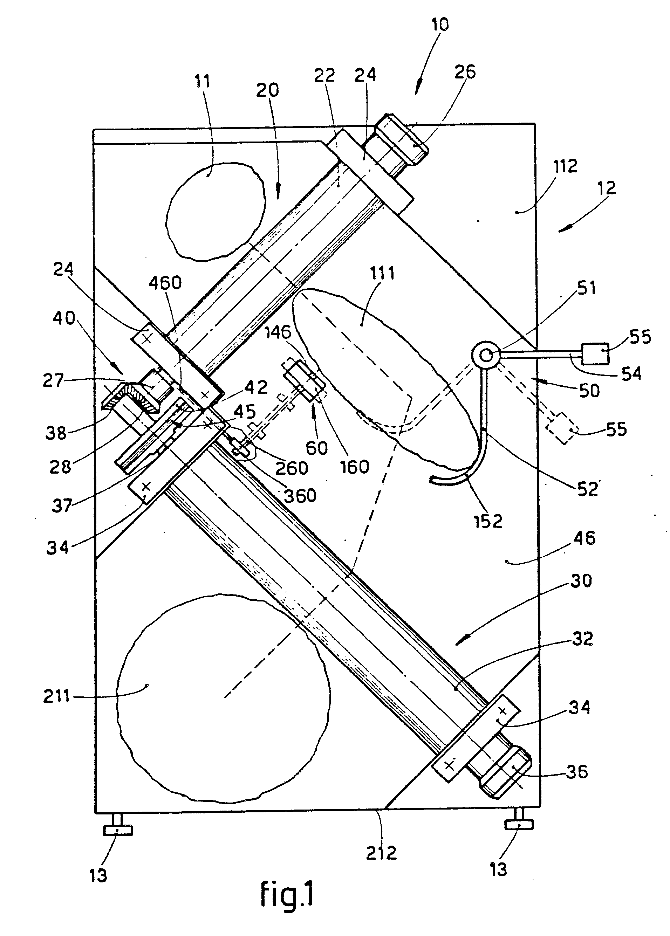

The rotating disk 160 protrudes through a slit 146 cut through the metal sheet 46 and is mounted below the metal sheet 46 on a shaft 260 equipped with a pulley 360, which is kinematically connected to the first pair of rollers 20 by a belt 460 so as to enable the disk 160 to rotate in synchronization with the first pair of rollers 20 (see the partially cutaway part of the metal sheet 46 in Fig. 1).

It is obvious that in this way the second rolling carried out by the second pair of rollers 30 will spread out the thin round of dough and make it take up a circular shape 211 and the desired thickness, which is determined by the gap between the rollers of the second pair of rollers 30.

We have described here a preferential embodiment of the invention, but many variants are possible. Thus the shapes, sizes and proportions of the parts can be changed, and different means to transmit and couple the motion to the rollers can be envisaged; it is possible to fit two or more pairs of rollers on a surface which can be upright or sloped otherwise, and the pairs of rollers can be positioned at other angles to each other by replacing the oscillating supporting and guiding means with a plurality of suitable means to rotate the thin rounds between one pair of rollers and the next pair of rollers.

Thus it is also possible to envisage that one or both of the pairs of rollers 20—30 or else that one or both of the rollers of a roller group are specially shaped axially or perhaps circumferentially.

## Claims

1. Device to spread the dough for pizza in two mutually perpendicular directions which has:
— a carrying structure (12) having a sloping working surface (112),
— a first pair (20) of spreading rollers to roll the dough (11), the rollers (20) being mounted at the upper end of supports (24) secured to the sloping working surface (112) of the carrying structure (12),
— a second pair (30) of spreading rollers to roll the dough, such rollers (30) being disposed below the first pair (20) of rollers and being secured to the sloping working surface (112) of the carrying structure (12) by supports (34), the feeding path of the second pair (30) of rollers being in the same plane as the feeding path of the first pair (20) of rollers,
— a metal sheet (46) which acts as a sliding surface for the dough and is installed on the sloping working surface (112) in such a way that the lower rollers (21—31) of the pairs (20—30) of rollers project partially above the metal sheet (46), whereby the projection of the lower rollers (21—31) can be regulated with suitable spacer means that anchor the metal sheet (46),
— an oscillating supporting and guiding means (50) which is fitted to the metal sheet (46) in the zone between the two pairs (20—30) of rollers and has an arm (52) which in its rest position is substantially at a right angle to the axis of departure of the dough (11), such arm (52) having a rounded portion positioned downstream of the axis of departure of the dough (111), the guiding means (50) being able temporarily to support and movably to guide the dough (111) sliding on the metal sheet (46), characterized in that the second pair (30) of spreading rollers is disposed at an angle relatively to the first pair (20) of spreading rollers and in that the first pair (20) of spreading rollers has a tilted lengthwise axis that diverges from the horizontal, and the oscillating supporting and guiding means (50) has an arm (52) with a rounded end portion (152) extending towards the first pair (20) of rollers, such rounded end portion (152) being adapted to support movably and guide the leading end of the dough (111) when the dough (111) is still engaged by the first pair (20) of rollers.

2. Device as claimed in Claim 1, characterized in that the extremity of the rounded end portion (152) extending towards the first pair of rollers (20) is directed substantially at a right angle to the axes of such first pair of rollers (20) when the arm (52) is in its initial position.

3. Device as claimed in Claim 1, wherein each pair of rollers (20—30) is positioned at an angle relative to the lower edge (212) of the sloping working surface (112) of the carrying structure (12), and such that a plane containing the nip between the two pairs of rollers (20—30) is substantially parallel to the metal sheet (46).

4. Device as claimed in any claim hereinbefore, wherein the oscillating supporting and guiding means (50) consists of a counterbalanced lever pivoting on the sliding surface sheet (46) in the zone between the pairs (20—30) of rollers and is equipped with a first curved arm (52) having an end portion (152) which retains sideways, supports and guides the dough (111), and with a second arm (54) which is provided with a counterweight (55) that regulates the supporting and guiding action exerted by the first curved arm (52).

5. Device as claimed in any claim hereinbefore, wherein at least one roller of at least one rolling pair (20—30) is specially shaped axially.

6. Device as claimed in any claim hereinbefore, wherein at least one roller of at least one rolling pair (20—30) is specially shaped circumferentially.

7. Device as claimed in any claim hereinbefore, which has a path-corrector means (60) consisting of a rotating disk (160) protruding through a slit (146) cut in the metal sheet (46) and cooperating with the internal side of the dough in relation to its major axis, the rotating disk (160) being kinematically connected to at least one (20) of the pairs (20—30) of rollers.

**Revendications**

1. Dispositif destiné à étaler la pâte à pizza dans deux directions perpendiculaires entre elles et qui comprend:
— une structure porteuse (12) possédant une surface de travail inclinée;
— une première paire (20) de rouleaux étaleurs servant à rouler la pâte (11), les rouleaux (20) étant montés à l'extrémité supérieure de supports (24) fixés à la surface de travail inclinée (112) de la structure porteuse (12);
— une deuxième paire (30) de rouleaux étaleurs servant à rouler la pâte, ces rouleaux (30) étant disposés au-dessous de la première paire (20) de rouleaux et étant fixés à la surface de travail inclinée (112) de la structure porteuse (12) par des supports (34), le trajet d'avance de la deuxième paire (30) de rouleaux se trouvant dans le même plan que le trajet d'avance de la première paire (20) de rouleaux;
— une tôle (46) qui joue le rôle d'une surface de glissement pour la pâte et qui est montée sur la surface de travail inclinée (112) de telle manière que les rouleaux inférieurs (21—31) des paires (20—30) de rouleaux fassent partiellement saillie au-dessus de la tôle (46), la saillie des rouleaux inférieurs (21—31) pouvant être réglée avec des moyens entretoises appropriés qui fixent la tôle (46),
— des moyens de support et de guidage oscillants (50) qui sont fixés à la tôle (46) dans la zone comprise entre les deux paires (20—30) de rouleaux et qui comprennent un bras (52) qui, dans sa position de repos, est sensiblement perpendiculaire à l'axe de sortie de la pâte (11), ce bras (52) possédant une partie courbe positionnée en aval de l'axe de sortie de la pâte (111), les moyens de guidage (50) étant capables de soutenir temporairement et de guider en mouvement la pâte qui glisse sur la tôle,
caractérisé en ce que la deuxième paire (30) de rouleaux étaleurs est disposée obliquement par rapport à la première paire (20) de rouleaux étaleurs et en ce que la première paire (20) de rouleaux étaleurs possède un axe longitudinal incliné qui diverge par rapport à l'horizontale, tandis que les moyens de support et de guidage oscillants (50) comprennent un bras (52) muni d'une partie d'extrémité courbe (152) qui s'étend vers la première pair (20) de rouleaux, cette partie d'extrémité courbe (152) étant adaptée pour supporter en mouvement et guider l'extrémité avant de la pâte (111) lorsque la pâte (111) est encore retenue par la première paire (20) de rouleaux.

2. Dispositif selon la revendication 1, caractérisé en ce que l'extrémité de la partie terminale courbe (152) qui s'étend vers la première paire de rouleaux (20) est dirigée sensiblement perpendiculairement aux axes de cette première paire (20) de rouleaux lorsque le bras (52) se trouve dans sa position initiale.

3. Dispositif selon la revendication 1, caractérisé en ce que chaque paire de rouleaux (20—30) est positionnée dans une direction inclinée par rapport au bord inférieur (212) de la surface de travail inclinée (112) de la structure porteuse (12) et de telle manière qu'un plan contenant la fente entre les deux paires de rouleaux (20—30) soit sensiblement parallèle à la tôle (46).

4. Dispositif selon l'une quelconque des revendications précédentes, caractérisé en ce que les moyens de support et de guidage oscillants (50) sont composés d'un levier équilibré qui s'articule sur la tôle (46) formant la surface de glissement et possède un premier bras recourbé (52) muni d'une partie d'extrémité (152) qui retient latéralement, soutient et guide la pâte (111) et un deuxième bras (54) qui est équipé d'un contre-poids (55) qui règle l'action de soutien et de guidage exercée par le premier bras recourbé (52).

5. Dispositif selon l'une quelconque des revendications précédentes, caractérisé en ce que au moins un rouleau d'au moins une paire de rouleaux (20—30) est d'une configuration axiale spéciale.

6. Dispositif selon l'une quelconque des revendications précédentes, caractérisé en ce que au moins un rouleau d'au moins une paire de rouleaux (20—30) est d'une forme spéciale dans la direction circonférentielle.

7. Dispositif selon l'une quelconque des revendications précédentes, caractérisé en ce qu'il comprend un moyen correcteur de trajectoire (60) composée d'un disque tournant (160) qui émerge à travers une fente (146) découpée dans la tôle (46) et qui coopère avec le côté intérieur de la pâte, relativement à son grand axe, le disque tournant (160) étant relié cinématiquement à au moins l'une (20) des paires de rouleaux (20—30).

**Patentansprüche**

1. Vorrichtung zum Auswalken eines Pizzateiges in zwei zueinander senkrechte Richtungen welche aufweist:
— ein Traggestell (12) mit einer geneigten Arbeitsfläche (112),
— ein erstes Walkwalzenpaar (20) zum Walken des Teiges (11), wobei die Walzen (20) am oberen Ende von Trägern (24) montiert sind, die an der geneigten Arbeitsfläche (112) des Traggestells (12) befestigt sind,
— ein zweites Walkwalzenpaar (30) zum Walken des Teiges, wobei diese Walzen (30) unterhalb des ersten Walkwalzenpaares (20) angeordnet und an der geneigten Arbeitsfläche (112) des Traggestells (12) mittels Trägern (34) befestigt sind und der Einzugsweg des zweiten Walzenpaares (30) in derselben Ebene liegt wie der Einzugsweg des ersten Walzenpaares (20),
— ein Metallblech (46), welches als Gleitfläche für den Teig wirkt und an der geneigten Arbeitsfläche (112) so angebracht ist, daß die unteren Walzen (21—31) der Walzenpaare (20—30) zu einem Teil das Metallblech (46) überragen, wobei das Überragen der unteren Walzen (21—31) mit geneigten, das Metallblech (46) haltenden Abstandshaltern einstellbar ist,
— eine pendelnde Stütz- und Führungseinrichtung (50), die im Bereich zwischen den zwei Walzenpaaren (20—30) an dem Metallblech (46) montiert ist und einen Arm (52) besitzt, der in seiner Ruhestellung im wesentlichen in einem rechten Winkel zur Austrittsrichtung des Teiges (11) liegt und der einen bezüglich der Austrittsrichtung des Teiges (111) stromab gelegenen gerundeten Teil besitzt, wobei die Führungseinrichtung (50) den auf dem Metallblech (46) gleitenden Teig (111) vorübergehend abstützen und beweglich führen kann, dadurch gekennzeichnet, daß das zweite Walkwalzenpaar (30) in einem Winkel bezüglich des ersten Walkwalzenpaares (20) angeordnet ist und daß das erste Walkwalzenpaar (20) eine geneigte Längsachse besitzt, die von der Horizontalen abweicht, daß die pendelnde Stütz- und Führungseinrichtung (50) einen Arm (52) mit einem gerundetem Endteil (152) besitzt, der sich in Richtung des ersten Walzenpaares (20) erstreckt und dieser gerundete Endteil (152) zur beweglichen Abstützung und zur Führung des vorderen Endes des Teiges (111) eingerichtet ist, während der Teig (111) noch von dem ersten Walzenpaar (20) erfaßt ist.

2. Vorrichtung nach Anspruch 1, dadurch gekennzeichnet, daß das Ende des gerundeten sich in Richtung des ersten Walzenpaares (20) erstreckenden Endteils (152) im wesentlichen rechtwinkelig zu den Achsen des ersten Walzenpaares (20) ausgerichtet ist, während sich der Arm (52) in seiner Ausgangslage befindet.

3. Vorrichtung nach Anspruch 1, bei welcher jedes Walzenpaar (20—30) bezüglich der unteren Kante (212) der geneigten Arbeitsfläche (112) des Traggestells (12) unter einem Winkel angeordnet ist und eine den Schlitz zwischen den beiden Walzenpaaren (20—30) enthaltende Ebene im wesentlichen parallel zu dem Metallblech (46) verläuft.

4. Vorrichtung nach einem der vorhergehenden Ansprüche, bei welcher die pendelnde Stütz- und Führungseinrichtung (50) aus einem ausbalancierten Hebel besteht, der im Bereich zwischen den Walzenpaaren (20—30) auf dem Gleitblech (46) schwenkbar und mit einem ersten gekrümmten Arm (52) versehen ist, der einen den Teig (111) seitlich zurückhaltenden, stützenden und führenden Endteil (152) besitzt, und mit einem zweiten Arm (54), der mit einem Gegengewicht (55) versehen ist, welches die von dem ersten, gekrümmten Arm (52) ausgeübte Stütz- und Führungswirkung reguliert.

5. Vorrichtung nach einem der vorhergehenden Ansprüche, bei welcher zumindest eine Walze zumindest eines Walzenpaares (20—30) in Achsrichtung besonders geformt ist.

6. Vorrichtung nach einem der vorhergehenden Ansprüche, bei welcher zumindest eine Walze zumindest eines Walzenpaares (20—30) in Umfangsrichtung besonders geformt ist.

7. Vorrichtung nach einem der vorhergehenden Ansprüche, mit einer Bahn- Korrektureinrichtung (60), die aus einer rotierenden Scheibe (160) besteht, welche aus einem in das Metallblech (46) geschnittenen Schlitz (146) vorsteht und mit der Innenseite des Teiges bezüglich seiner Hauptachse zusammenwirkt, wobei die rotierende Scheibe (160) mit zumindest einem (20) Walzenpaar (20—30) kinematisch verbunden ist.

fig.1

fig.2